(19) Europäisches Patentamt / European Patent Office / Office européen des brevets

(11) **EP 2 980 127 B1**

(12) **EUROPEAN PATENT SPECIFICATION**

(45) Date of publication and mention
of the grant of the patent:
**17.10.2018 Bulletin 2018/42**

(51) Int Cl.:
*C08J 3/05* (2006.01)      *C08J 3/07* (2006.01)
*C08J 5/02* (2006.01)      *B29C 41/14* (2006.01)
*C08C 1/075* (2006.01)

(21) Application number: **14773853.8**

(22) Date of filing: **24.03.2014**

(86) International application number:
**PCT/JP2014/057983**

(87) International publication number:
**WO 2014/157034 (02.10.2014 Gazette 2014/40)**

(54) **METHOD FOR PRODUCING SYNTHETIC ISOPRENE POLYMER LATEX**

VERFAHREN ZUR HERSTELLUNG VON SYNTHETISCHEM ISOPREN-POLYMERLATEX

PROCÉDÉ DE PRODUCTION DE LATEX DE POLYMÈRE D'ISOPRÈNE DE SYNTHÈSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2013 JP 2013070350**

(43) Date of publication of application:
**03.02.2016 Bulletin 2016/05**

(73) Proprietor: **Zeon Corporation
Tokyo 100-8246 (JP)**

(72) Inventors:
• **SATOH, Yoshitaka
Tokyo 100-8246 (JP)**
• **NAKAMURA, Yoshiyuki
Tokyo 100-8246 (JP)**

(74) Representative: **Adam, Holger
Kraus & Weisert
Patentanwälte PartGmbB
Thomas-Wimmer-Ring 15
80539 München (DE)**

(56) References cited:
**EP-A1- 2 960 293      JP-A- 2000 317 274
JP-A- 2003 517 073      JP-A- 2009 209 229
JP-A- 2009 533 501      JP-A- 2011 219 543
JP-A- 2011 518 233      JP-A- 2011 527 376
JP-A- 2012 062 487      US-A- 3 445 414**

**Description**

TECHNICAL FIELD

The present invention relates to a method for producing a synthetic isoprene polymer latex capable of reducing the amount of waste of the surfactant and the synthetic isoprene polymer during the production step of the synthetic isoprene polymer latex, and also producing only small amount of aggregates.

BACKGROUND ART

Conventionally, it is known that dip molded article which is to be used by contacting the human body such as a nipple, a balloon, gloves, balloon and a sack or so can be obtained by dip molding the composition for a dip molding which comprises latex of natural rubber. However, latex of natural rubber comprises proteins which causes an allergy reaction to human body, thus in some case there is a problem as the dip molded article which directly contact with the biological mucosa or the organs. Therefore, the latex of the synthetic isoprene polymer is considered for using instead of the latex of the natural rubber, and particularly the method for producing the synthetic isoprene polymer latex efficiently is in demand.

For example, in the patent document 1, a cyclohexane solution of the synthetic isoprene polymer and an emulsifier aqueous solution are mixed and emulsified, the cyclohexane is distilled from the obtained emulsified mixed liquid to obtain the latex of the synthetic isoprene polymer, then the centrifugation is carried out by a sealed disk type continuous centrifuge for condensation; thereby the synthetic isoprene polymer latex as the light liquid after the centrifugation is obtained which has almost no aggregates and with small amount of the emulsifier residue.

However, for example, the production method of the synthetic isoprene polymer latex of the above mentioned patent document 1 does not consider the collection and the recycle of the surfactant or the synthetic isoprene polymer remaining in the heavy liquid (the remaining liquid after removing the light liquid), thus the large amount of the surfactant aqueous solution is discarded, hence the load of the waste water treatment increases, and also in some case the entire remaining synthetic isoprene polymer had to be discarded.

PRIOR ART DOCUMENT

Patent document 1: JP Patent Application Laid Open No.2009-179680

SUMMARY OF THE INVENTION

TECHNICAL PROBLEMS TO BE SOLVED BY THE INVENTION

The object of the present invention is to provide the production method of the synthetic isoprene polymer latex which can reduce the discarded amount of the surfactant and the synthetic isoprene polymer, and also having little amount of the aggregates generated during the production step of the synthetic isoprene polymer latex.

MEANS FOR SOLVING THE PROBLEMS

As a result of keen examination by the present inventors, the followings were found.

(i) By adding the solidifier to the waste liquid (the heavy liquid or so of after the centrifugation) including the synthetic isoprene polymer, the synthetic isoprene polymer can be collected and recycled by solidifying it. However, since the solidifier remains in the collected isoprene polymer, when obtaining the synthetic isoprene polymer latex from the organic solvent solution of said synthetic isoprene polymer (the organic solvent is removed from the emulsified mixed liquid which is obtained by emulsifying said organic solvent solution), a large amount of the aggregates may be generated (it becomes the synthetic isoprene polymer which is not suited for recycling) in some case.

(ii) Also, the heavy liquid (comprising the synthetic isoprene polymer and the surfactant) generated by the condensation by the centrifugation may be used for the recycling in addition to be used as the source material (the organic solvent solution of the synthetic isoprene polymer, or the aqueous solution of the surfactant) before mixing and emulsifying. However, even in such case, the aggregates are generated, and also the mechanical strength of the dip molded article declined in some cases.

Based on such finding, in order to solve the above mentioned problem, the present inventors have carried out keen examination, thereby found that,

(iii) the above object can be solved by emulsifying the aqueous dispersion comprising the specific amount of the synthetic isoprene polymer and the specific amount of the surfactant, and the organic solvent solution of the synthetic isoprene polymer to obtain the emulsified mixed liquid, then by removing the organic solvent from the emulsified mixed liquid.

That is, the present invention provides a method for producing a synthetic isoprene polymer latex (D) comprising a step of mixing an aqueous dispersion (A) comprising 0.1 to 5 wt% of a synthetic isoprene polymer and 0.1 to 20 wt% of a surfactant, and an organic solvent solution (B) of a synthetic isoprene polymer and emulsifying the mixture to obtain a emulsified mixed liquid (C), then removing the organic solvent from the emulsified mixed liquid (C).

Further, it is preferable to include a step of centrifuging a synthetic isoprene polymer latex (E) obtained by removing the organic solvent from said emulsified mixed liquid (C), to obtain the synthetic isoprene polymer latex (D) as a light liquid, and a waste liquid (F) comprising the synthetic isoprene polymer and a surfactant as the heavy liquid.

Further, said aqueous dispersion (A) is preferably obtained by ultrafiltrating said waste liquid (F).

EFFECT OF THE INVENTION

According to the present invention, the production method of the synthetic isoprene polymer latex which can reduce the discarded amount of the surfactant and the synthetic isoprene polymer, and also having little amount of the aggregates generated during the production step of the synthetic isoprene polymer latex is provided. A dip molding composition which gives a dip molded article having excellent tensile strength obtained using such synthetic isoprene polymer latex is described, and also the dip molded article obtained by molding said dip molding composition is described.

DETAILED DESCRIPTION OF FIGURES

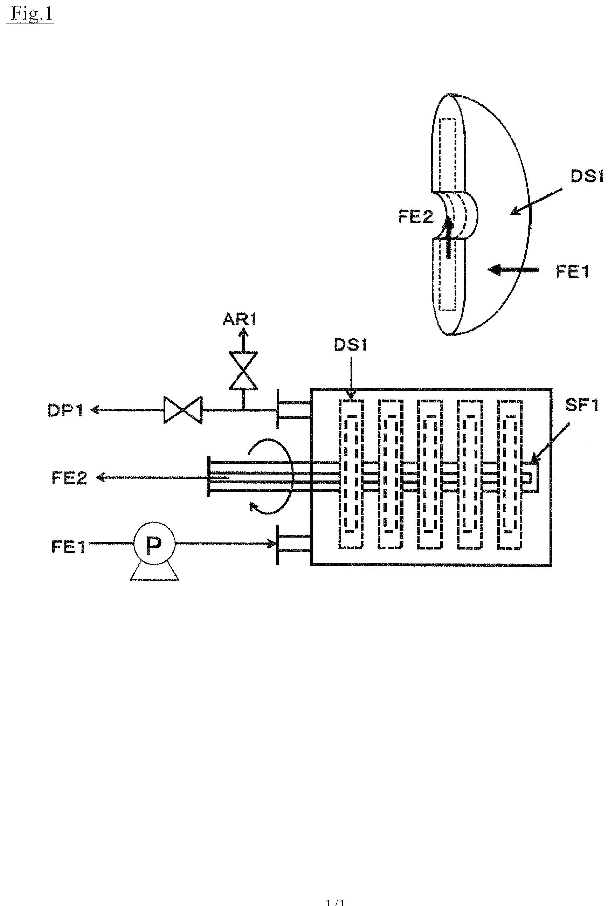

[Fig.1] Fig.1 is a schematic figure of ultrafiltration device provided with the filtration material made of ceramic.

EMBODIMENTS FOR CARRYING OUT THE INVENTION

The production method of the synthetic isoprene polymer latex (D) of the present invention includes a step of mixing an aqueous dispersion (A) comprising 0.1 to 5 wt% of a synthetic isoprene polymer and 0.1 to 20 wt% of a surfactant, and an organic solvent solution (B) of a synthetic isoprene polymer and emulsifying the mixture to obtain a emulsified mixed liquid (C), then removing the organic solvent from the emulsified mixed liquid (C).

Further, it is preferable to include a step of centrifuging a synthetic isoprene polymer latex (E) obtained by removing the organic solvent solution from said emulsified mixed liquid (C), to obtain the synthetic isoprene polymer latex (D) as a light liquid and a waste liquid (F) comprising the synthetic isoprene polymer and a surfactant as a heavy liquid.

Synthetic isoprene polymer

The synthetic isoprene polymer used in the present invention is the synthetic isoprene polymer obtained by polymerizing isoprene.

The synthetic isoprene polymer may be those copolymerizing other ethylenic unsaturated monomer which can copolymerize with isoprene. The content of the isoprene unit of the synthetic isoprene polymer is preferably 70 wt% or more, more preferably 90 wt% or more, further preferably 95 wt% or more, and particularly preferably 100 wt% (the homopolymer of isoprene), with respect to entire monomer unit since the dip molded article having excellent flexibility and tensile strength can be easily obtained.

As for other ethylenic unsaturated monomer copolymerizable with isoprene, for example, a conjugated diene monomer other than isoprene such as butadiene, chloroprene, 1,3-pentadiene or so; ethylenic unsaturated nitrile monomer such as acrylonitrile, methacrylonitrile, fumaronitrile, $\alpha$-chloroacrylonitrile or so; vinyl aromatic group monomer such as styrene, alkylstyrene or so; ethylenic unsaturated carboxylic acid ester monomer such as methyl (meth)acrylate, ethyl (meth)acrylate, butyl (meth)acrylate, 2-ethylhexyl (meth)acrylate or so may be mentioned. These ethylenic unsaturated monomers capable of copolymerizing with isoprene may be used alone or by combining two or more. Note that, in the present specification, (meth)acrylic refers to acrylic and methacrylic both.

The synthetic isoprene polymer can be obtained by solution polymerizing the isoprene in the inactive polymerization solvent by using such as Ziegler polymerization catalyst formed of trialkylaluminum-titanium tetrachloride, alkyl lithium polymerization catalyst such as n-butyllithium, and sec-butyllithium or so. Then, the polymer solution of the synthetic isoprene solution obtained as such may be used for the synthetic isoprene polymer latex, but also it may be used for the production of the synthetic isoprene polymer latex by taking out the solid synthetic isoprene polymer from said polymer solution and then dissolving said solid synthetic isoprene polymer in the organic solvent.

At this time, the impurities such as the residues of the polymerization catalyst remaining in the polymer solution after the synthesis can be removed. Further, antioxidant which will be described in below may be added to the solution of after the polymerization or during the polymerization. Also, the commercially available solid synthetic isoprene polymer may be used for the production of the synthetic isoprene polymer latex.

As for the isoprene unit in the synthetic isoprene polymer, there are 4 types depending on the form of the bonding which are cis-bonding unit, trans-bonding unit, 1,2-vinyl bonding unit and 3,4-vinyl bonding unit.

From the point of improving the tensile strength of the dip molded article, the content ratio of the cis-bonding unit in the isoprene unit included in the synthetic isoprene polymer is preferably 70 wt% or more, more preferably 90 wt% or more, and particularly preferably 95 wt% or more with respect to entire isoprene unit.

The weight average molecular weight of the synthetic isoprene polymer is 10,000 to 5,000,000, preferably 500,000 to 5,000,000, and particularly preferably 800,000 to 3,000,000 in terms of standard polystyrene conversion by a gel permeation chromatography analysis. If the weight average molecular weight of the synthetic isoprene polymer is too small, the tensile strength of the dip molded article tends to decline, and on the other hand, if it is too large, the latex (the aqueous dispersion) of the synthetic isoprene polymer tends to become difficult to produce.

Also, a polymer Mooney viscosity [$ML_{1-4}$, 100°C] of the synthetic isoprene polymer is preferably 50 to 80, more preferably 60 to 80, and particularly preferably 70 to 80.

Surfactant

As the surfactant used in the present invention, anionic surfactant is preferable. As specific example of the anionic surfactant, fatty acid salts such as sodium laurate, potassium myristate, sodium palmitate, potassium oleate, sodium linolenate, sodium rosinate, posttasium rosinate or so; alkylbenzene sulfonate such as sodium dodecylbenzene sulfonate, potassium dodecylbenzene sulfonate, sodium decylbenzene sulfonate, potassium decylbenzene sulfonate, sodium cetylbenzene sulfonate, potassium cetylbenzene sulfonate or so; alkyl sulfosuccinates such as sodium di(2-ethylhexyl)sulfosuccinate, potassium di(2-ethylhexyl)sulfosuccinate, sodium dioctylsulfosuccinate or so; alkyl sulfates such as sodium lauryl sulfate, potassium lauryl sulfate or so; polyoxyethylene alkyl sulfates such as sodium polyoxyethylenelaurylether sulfate, potassium polyoxyethylenelaurylether sulfate or so; monoalkylphosphates such as sodium lauryl phosphate, potassium lauryl phosphate or so; the copolymerizable surfactants such as sulfoesters of $\alpha,\beta$-unsaturated carboxylic acid, sulfate esters of $\alpha,\beta$-unsaturated carboxylic acid, and sulfoalkylarylethers or so may be mentioned.

However, since the polymerization catalyst (particularly, aluminum and titanium), which remains in a small amount, derived from the synthetic isoprene polymer can be efficiently removed, and the aggregates during the production of the dip molding composition can be suppressed; it is preferable to together use the fatty acid and at least one selected from the group consisting of alkyl benzene sulfonates, alkyl sulfosuccinates, alkyl sulfates and polyoxyethylenealkyl ether sulfates; and particularly preferably alkylbenzene sulfonates and the fatty acids is used together. Here, as the fatty acid salts, sodium rosinate and potassium rosinate are preferable; and also as the alkyl benzene sulfonates, sodium dodecyl benzene sulfonate and potassium dodecyl benzene sulfonate are preferable. Also, these surfactants may be used alone or by combining two or more thereof.

Note that, in case of using both the fatty acids, and the anionic surfactant of at least one selected from the group consisting of alkyl benzene sulfonates, alkyl sulfosuccinates, alkyl sulfates and polyoxyethylenealkyl ether sulfates, the used ratio of these, that is the weight ratio of "the fatty acid" : "the anionic surfactant of at least one selected from the group consisting of alkyl benzene sulfonates, alkyl sulfosuccinates, alkyl sulfates and polyoxyethylenealkyl ether sulfates" is preferably within 1 : 1 to 10 : 1, more preferably 1 : 1 to 7 : 1. If the used ratio of the anionic surfactant of at least one selected from the group consisting of alkyl benzene sulfonates, alkyl sulfosuccinates, alkyl sulfates and polyoxyethylenealkyl ether sulfates is too much, then the foaming may become too much during the emulsification or the organic solvent removal of the synthetic isoprene polymer; as a result it may be necessary to leave it still for a long period of time, or the procedure to add the defoaming agent may become necessary, which will cause the deterioration of the workability and the increase of the cost. On the other hand, if the used ratio of the anionic surfactant of at least one selected from the group consisting of alkyl benzene sulfonates, alkyl sulfosuccinates, alkyl sulfates and polyoxyethylenealkyl ethersulfates is too little, a large amount of the aggregates tends to be produced during the emulsification and organic solvent removal.

Note that, as long as it is within the range which does not interfere the coagulation by the coagulant which is used during the dip molding, a non-ionic surfactant may be used together such as polyoxyethylene alkyl ether, polyoxyethylenealkylphenol ether, polyoxyethylenealkylester, polyoxyethylene sorbitan alkylester or so.

Aqueous dispersion (A)

The aqueous dispersion (A) used in the present invention comprises 0.1 to 5 wt% of the synthetic isoprene polymer and 0.1 to 20 wt% of the surfactant. Also, the aqueous dispersion (A) preferably comprises the heavy liquid (the waste liquid (F)) which is after the above mentioned centrifugation in order to reduce the discarded amount of the surfactant and the synthetic isoprene polymer during the production step of the synthetic isoprene polymer latex. Here, the aqueous dispersion (A) preferably comprises 70 wt% or more of the heavy liquid (the waste liquid (F)) of after the centrifugation, more preferably comprises 90 wt% or more, and particularly preferably comprises 100 wt% (the case which consist only from the waste liquid (F)). Note that, the heavy liquid (the waste liquid (F)) of after the centrifugation is preferably obtained by ultrafiltration.

The amount of the synthetic isoprene polymer in the aqueous dispersion (A) is 0.1 to 5 wt%, preferably 0.1 to 4 wt%, and particularly preferably 0.1 to 3 wt%. If the amount of the synthetic isoprene polymer in the aqueous dispersion (A) is too much, the aggregates may be produced easily during the removal of the organic solvent from the emulsified mixed liquid (C). Also, if the amount of the synthetic isoprene polymer in the aqueous dispersion (A) is too little, then the discarded amount of the synthetic isoprene polymer may not be reduced.

The amount of the surfactant in the aqueous dispersion (A) is 0.1 to 20 wt%, more preferably 0.2 to 10 wt%, and particularly preferably 0.3 to 5 wt%. If the amount of the surfactant in the aqueous dispersion (A) is too little, the aggregates may be easily produced during the removal of the organic solvent from the emulsified mixed liquid (C). Also, if the amount of the surfactant in the aqueous dispersion (A) is too much, the viscosity may become too large, and it may be difficult to handle during the emulsification.

Note that, in case of using two or more types of the surfactants, the total content of these are preferably within the above mentioned range. That is, in case of using the fatty acids, and the anionic surfactant of at least one selected from the group consisting of alkyl benzene sulfonates, alkyl sulfosuccinates, alkyl sulfates and polyoxyethylenealkyl ether sulfates, the total content of these are preferably within the above mentioned range.

As the type of the water used for the aqueous dispersion (A), hard water, a soft water, ion exchange water, distilled water and zeolite water or so may be mentioned, and a soft water, ion exchange water, and distilled water are preferable.

Note that, in the aqueous dispersion (A), the additives such as a pH modifier, a defoaming agent, a preservative, a chelate agent, an oxygen scavenger, a disperser, an antioxidant or so may be blended.

Organic solvent solution (B) of synthetic isoprene polymer

As the organic solvent solution (B) of the synthetic isoprene polymer used in the present invention, the synthetic isoprene polymer is dissolved in the organic solvent. Note that, as the synthetic isoprene polymer, those mentioned in the above can be used.

Also as the organic solvent, for example, aromatic hydrocarbon solvents such as benzene, toluene, xylene or so; alicyclic hydrocarbon solvents such as cyclopentane, cyclopentene, cyclohexane, cyclohexene or so; aliphatic hydrocarbon solvents such as pentane, hexane, heptane or so; halogenated hydrocarbon solvents such as methylene chloride, chloroform, ethylene dichloride or so may be mentioned. Among these, alicyclic hydrocarbon solvents are preferable, and cyclohexane is particularly preferable.

Note that, the used amount of the organic solvent is preferably 2,000 parts by weight or less, more preferably 20 to 1,500 parts by weight with respect to 100 parts by weight of the synthetic isoprene polymer.

The polymer concentration of the organic solvent solution (B) of the synthetic isoprene polymer is not particularly limited, however it is preferably 1 to 15 wt%, and more preferably 5 to 10 wt%. If the polymer concentration is too high, the viscosity becomes too high, and the transportation may become difficult. Also, if the polymer concentration is too low, the productivity tends to decline.

As the preparation method of the organic solvent solution (B) of the synthetic isoprene polymer (B), for example, (i) the method of using the polymer solution of the synthetic isoprene polymer obtained by solution polymerization directly as the organic solvent solution of the synthetic isoprene polymer; and (ii) the method of taking out the solid isoprene polymer from the synthetic isoprene polymer solution obtained by the solution polymerization, then again dissolving said solid synthetic isoprene polymer in the organic solvent to obtain the polymerization solution of the synthetic isoprene polymer or so may be mentioned. However, from the point of removing the impurities such as residues of the polymerization catalyst remaining in the polymer solution, the method of (ii) is preferable. Note that, when the commercially available synthetic isoprene polymer is used for the polymer solution of the synthetic isoprene polymer by dissolving in the organic solvent, the above mentioned method (ii) is also used.

Emulsified mixed liquid (C)

In the production method of the present invention, the aqueous dispersion (A) comprising 0.1 to 5 wt% of the synthetic isoprene polymer and 0.1 to 20 wt% of the surfactant, and the organic solvent solution (B) of the synthetic isoprene polymer are mixed and emulsified, thereby the emulsified mixed liquid (C) is obtained.

The mixing ratio of the aqueous dispersion (A) and the organic solvent solution (B), in terms of the weight ratio of the aqueous dispersion (A) and the organic solvent solution (B) (the weight of the aqueous dispersion (A) : the weight of the organic solvent solution (B)), is preferably (0.5:2) to (2:0.5), more preferably (0.5:1.5) to (1.5:0.5), and particularly preferably (0.8:1.2) to (1.2:0.8).

Also, the solid amount of the synthetic isoprene polymer in the emulsified mixed liquid (C) is preferably 0.5 to 12 wt%, and more preferably 1 to 8 wt%.

Further, the solid amount of the surfactant in the emulsified mixed liquid (C) is preferably 0.05 to 10 wt%, and more preferably 0.1 to 5 wt%.

When emulsifying the aqueous dispersion (A) and the organic solvent solution (B), commercially available emulsifying device or the disperser in general may be used. Also, in addition to the surfactant comprised in the aqueous dispersion (A), the surfactant may be further added. Note that, as the surfactant which is further added, those mentioned in the above may be mentioned. Also, it is preferable to mix the aqueous dispersion (A) and the organic solvent solution (B) then emulsifying by the emulsifying device or the disperser.

As the emulsifying device, for example, a batch type emulsifying device such as the product name "Disperser" (made by IKA), the product name "POLYTRON" (made by Kinematica) and the product name "TK-HOMOGENIGING MIXER" (made by PRIMIX Corporation) or so; a continuous type emulsifying device such as the product name ""TK-pipeline homomixer" (made by PRIMIX Corporation), the product name "Colloide mill" (made by Kobelco Eco-solutions Co.,LTD), the product name "Slusher" (made by NIPPON COKE & ENGINEERING CO.,LTD), the product name "Trigonal wet-type fine grinding mill" (made by NIPPON COKE & ENGINEERING CO.,LTD), the product name "CAVITRON" (made by EUROTEC. CO.,LTD), the product name "MILDER" (made by Pacific Machinery & Engineering Co.,Ltd), the product name "Fine flow mill" (made by Pacific Machinery & Engineering Co.,Ltd); a high pressure type emulsifying device such as the product name "Microfluidizer" (made by MIZUHO INDUSTRIAL CO.,LTD), the product name "Nanomizer" (made by NANOMIZER Inc), the product name "APV Gaulin" (made by Gaulin Co., Ltd); a membrane type emulsifying device such as the product name "Membrane emulsifying device" (made by REICA Co., Ltd); the vibrating type emulsifying device such as the product name "VIBROMIXER" (made by REICA Co., Ltd); an ultrasonic emulsifying device such as the product name "ultrasonic homogenizer" (made by Branson Ultrasonics, Emerson Japan, Ltd) or so may be mentioned. Note that, the condition of the emulsifying procedure by the emulsifying device is not particularly limited and the treatment temperature and the temperature time or so can be set approprietly, so that the desired dispersed condition can be obtained.

Synthetic isoprene polymer latex (C)

In the production method of the present invention, the synthetic isoprene polymer latex (D) is obtained by removing the organic solvent form the above mentioned emulsified mixed liquid (C).

As the method for removing the organic solvent from the emulsified mixed liquid (C), the vacuum distillation, atmospheric distillation, steam distillation and centrifugation or so can be employed; however the vacuum distillation and atmospheric distillation are preferable since the organic solvent can be removed easily. Also, the content of the organic solvent in the synthetic isoprene polymer latex (D) is preferably 500 weight ppm or less.

The temperature of the vacuum distillation and atmospheric distillation are preferably 50 to 100°C. The pressure of the vacuum distillation is preferably -50 to -1 kPa (the gauge pressure).

Also, in the production method of the present invention, preferably the synthetic isoprene polymer latex (E) obtained by removing the organic solvent from the above mentioned emulsified liquid (C) is centrifuged for the concentration, thereby the condenced synthetic isoprene polymer latex (D) is obtained as the light liquid, and the waste liquid (F) comprising the synthetic isoprene polymer and the surfactant is obtained as the heavy liquid.

For the centrifugation, the centrifuge is used, and preferably the centrifugal force is 2,000 to 5,000 G, the solid concentration of the synthetic isoprene polymer latex (E) is preferably 2 to 15 wt%, and the back pressure (the gauge pressure) of the centrifuge is preferably 0.03 to 1.6 MPa. Also, in case of using the continuous centrifuge, the flow speed for introducing into the centrifuge is preferably 500 to 2000 Kg/hr.

As the centrifuge, it is not particularly limited, and for example, the continuous centrifuge such as the product name "SRG610" (made by ALFA LAVAL), the batch type centrifuge such as the product name "H-2000B" (made by KOKUSAN Co.,Ltd) or so may be mentioned, and the continuous centrifuge is preferable since it has high processing ability.

The solid concentration of the synthetic isoprene polymer latex (D) is preferably 30 to 70 wt%, more preferably 40 to 70 wt%. If the solid concentration is too low, the synthetic isoprene polymer particles may separate when the synthetic isoprene polymer latex (D) is stored, and on the other hand if it is too high, the synthetic isoprene polymer particles may aggregate and form the coarse aggregates.

The volume average particle diameter of the latex particle in the synthetic isoprene polymer latex (D) is 0.5 to 10 $\mu$m, preferably 0.5 to 3 $\mu$m, and more preferably 0.5 to 2 $\mu$m. If this volume average particle diameter is too small, the latex viscosity may become too high and the handling may become difficult, on the other hand, if it is too large, the coating may be formed on the latex surface when storing the synthetic isoprene polymer latex.

Also, the content of the organic solvent in the synthetic isoprene polymer latex (D) is preferably 500 weight ppm or less, more preferably 300 weight ppm or less, and particularly preferably 100 weight ppm or less.

Further, the remaining amount of the surfactant in the synthetic isoprene polymer latex (D) is preferably 2.5 parts by weight or less and more preferably 0.1 to 2 parts by weight with respect to 100 parts by weight of the synthetic isoprene polymer. By setting the remaining amount of the surfactant within the above mentioned range, the foaming of the synthetic isoprene polymer latex (D) can be reduced, and further the tensile strength of the dip molded article can be improved.

Heavy liquid (the waste liquid (F))

In the production method of the present invention, the heavy liquid (comprising the waste liquid (F), the synthetic isoprene polymer and the surfactant) obtained by centrifugation is preferably recycled as the aqueous dispersion (A).

In this case, the above mentioned waste liquid (F) is ultrafiltered, thereby preferably the aqueous dispersion (A) comprising 0.1 to 5 wt% of the synthetic isoprene polymer and 0.1 to 20 wt% of the surfactant is obtained.

As the method of the ultrafiltration, the product name "UF module AP-1050" (made by Asahi Kasei Corporation), the product name "UF module SLP-1053" (made by Asahi Kasei Corporation), the product name "SDR305CE1" (Solaris CL filter, made by Entegris, Inc), the product name "SF-011T" (membrane type recovery device, made by KURITA WATER INDUSTRIES LTD), the product name "Rotary fileter-R-FineSSDF-0.5" (made by KOTOBUKI INDUSTRIES CO.,LTD) or so can be used. However, the ultrafiltration device mounting the filter material made of ceramic such as the product name "Rotary fileter-R-FineSSDF-0.5" (made by KOTOBUKI INDUSTRIES CO.,LTD) is preferably used, since the remaining amount of the synthetic isoprene polymer and the surfactant can be easily controlled by carrying out the ultrafiltration continuously for long period of time (which means that the cleaning frequency is only few).

As the filter material made of ceramics, for example, the product name "$\phi$ 0.5 $\mu$m filter made of ceramic" (made by Novoflow GmbH) or so may be mentioned. The pore diameter of the filter material made of ceramic is preferably 7 nm to 2 $\mu$m, and further preferably 60 nm to 0.5 $\mu$m. If the particle diameter of the filter material is too small, the production is difficult thus it is difficult to obtain, also processing amount by the filtration becomes too small, hence the productivity declines. Also, in case the pore diameter is too large, both the synthetic isoprene polymer and the surfactant passes through as the filtrate, hence the effect of the ultrafiltration of the above mentioned waste liquid (F) will be lost.

The ultrafiltration device mounted with the filter material made of ceramic can rotate the filter material made of ceramic and preferably comprises the function to prevent the formation of the cake layer, in order to improve the filtering efficiency and to prevent the clogging of the pores. As the function of preventing the formation of the cake layer which is formed at the filter material surface, for example those comprising a scraping part such as a spatula or so, or the function of applying the pressure to the opposite direction against the flow direction of the filtrate using the air or water (the backwashing function) or so may be mentioned. Also, as the ultrafiltration device mounting the filter material made of ceramic having the backwashing function, for example the product name "Rotary fileter-R-FineSSDF-0.5" (made by KOTOBUKI INDUSTRIES CO.,LTD) or so may be mentioned.

One example of the ultrafiltration device mounting the filter material made of ceramic having the backwashing function is shown in Fig.1. In the ultrafiltration device of Fig.1, plurality of the filter materials made of ceramic (DS1) having a disk form with hollow structure are connected to the shaft (SF1) having a rotatable hollow structure. The heavy liquid (FE1) of after the centrifugation is supplied to the inside of the ultrafiltration device using a pump (P). Then, due to the pressure of the pump (P), it is filtered by the filter material (DS1) made of ceramic, then discharged to the outside as the filtrate (FE2) wherein a part of the synthetic isoprene polymer has been removed. Note that, since the surfactant is dissolved in the water, it is barely removed by the filter material (DS1) made of ceramic; only the concentration of the synthetic isoprene polymer tends to be reduced in the filtrate (FE2). Thereby, in case the heavy liquid of after the centrifugation is recycled, the synthetic isoprene polymer amount in the aqueous dispersion (A) can be controlled within the predetermined range. Also, by rotating the shaft (SF1) having a hollow structure, the cake layer can be prevented from forming on the filter material (DS1) made of ceramic (the pore clogging can be prevented).

Note that, in order to prevent the cake layer from forming on the filter material (DS1) made of ceramic, it is preferable to carry out the backwashing in a predetermined interval. During the backwashing, the water or the air is supplied to the shaft (SF1) having a hollow structure, thus the water or the air flows towards the outside from the inside of the filter material (DS1) made of ceramic, hence the cake layer on the filter material (DS1) made of ceramic can be removed.

In case of the ultrafiltration device mounting the filter material made of ceramic such as in Fig.1, it is preferable to carry out the ultrafiltration and the backwashing while rotating the shaft (SF1) having the hollow structure.

As the rotational speed of the shaft, the tip speed (the circumferential speed) of the filter material (DS1) made of ceramic is preferably 4 to 10 m/s.

Also, the pressure during the filtration by the filter material (DS1) made of ceramic is preferably 0.05 to 1 MPa.

Further, the temperature during the ultrafiltration is preferably 5 to 30°C.

As the flow speed (the volume flow speed per 1 $m^2$ of filter membrane) for supplying the waste liquid (F) to the ultrafiltration device, 15 to 80 litter/hr·$m^2$, is preferable, and 20 to 60 litter/hr·$m^2$ is more preferable. Also, as the backwashing interval in case the ultrafiltration comprises the backwashing function, it may be set depending on the condition of the formation of the cake layer on the filter membrane, and usually it is backwashed for 5 seconds to 20 seconds per 2 minutes to 5 minutes.

The volume average particle diameter of the isoprene polymer particle in the waste liquid (F) is preferably 0.001 to 30 $\mu$m, and more preferably 0.1 to 5 $\mu$m. If the volume average particle diameter of the synthetic isoprene particle is too small, the synthetic isoprene polymer particle passes through the ultrafiltration membrane (it enters into the filtrate), hence it becomes difficult to control the amount of the synthetic isoprene polymer and the amount of the surfactant within the predetermined range, and also it becomes difficult to handle since the viscosity of the filtrate increases.

Note that, the preferable embodiment of the aqueous dispersion (A) obtained by centrifuging the waste liquid (F) is as already mentioned in the above.

Dip molding composition

The dip molding composition described herein comprises a sulfur based vulcanizing agent and a vulcanization accelerator in addition to the above mentioned synthetic isoprene polymer latex (D).

As for the sulfur based vulcanizing agent, for example, sulfurs such as sulfur powder, flowers of sulfur, precipitated sulfur, colloidal flower, surface treated sulfur, insoluble sulfur or so; sulfur containing compounds such as sulfur chloride, sulfur dichloride, morpholine-disulfide, alkylphenol-disulfide, N,N'-dithio-bis(hexahydro-2H-azepinone-2), phosphorus containing polysulfide, polysulfide polymer, 2-(4'-morphollinodithio)benzothianol or so may be mentioned. Among these, sulfur is preferably used. These sulfur based vulcanizing agents can be used alone or by combining two or more thereof.

The used amount of the sulfur based vulcanizing agent is preferably 0.1 to 10 parts by weight, more preferably 0.2 to 3 parts by weight with respect to 100 parts by weight of the synthetic isoprene polymer. When this amount is within this range, the tensile strength of the dip molded article is even more improved.

As the vulcanization accelerator, those usually used for the dip molding can be used, for example, dithiocabamic acids such as diethyl dithiocarbamate, dibutyl dithiocarbamate, di-2-ethylhexyl dithiocarbamate, dicyclohexyl dithiocarbamate, diphenyl dithiocarbamate, dibenzyl dithiocarbamate or so and the zinc salts thereof; 2-mercatobenzo thiazole, zinc 2-mercaptobenzothiazole, 2-mercaptothiazoline, dibenzothiazyl-disulfide, 2-(2,4-dinitrophenylthio)benzothiazole, 2-(N,N-diethylthio-carbaylthio)benzothiazole, 2-(2,6-dimethyl-4-morpholinothio)benzothiazole, 2-(4'-morpholino-dithio) benzothiazole, 4-morpholinyl-2-benzothiazyl-disulfide, 1,3-bis(2-benzothiazyl-mercaptomethyl)urea or so may be mentioned. However, zinc diethyl dithiocarbamate, zinc dibutyl dithiocarbamate, 2-mercaptobenzothiazole, zinc 2-mercaptobenzothiazole is preferable. These vulcanization accelerators may be used alone, or by combining two or more thereof.

The used amount of the vulcanization accelerators is preferably 0.05 to 5 parts by weight and more preferably 0.1 to 2 parts by weight with respect to 100 parts by weight of the synthetic isoprene polymer. If this amount is too little, the tensile strength of the dip molded article may decline in some case. Also, if it is too much, the elongation and the tensile strength of the dip molded article may decline in some case.

The composition for the dip molded article preferably further comprises zinc oxide.

The content of the zinc oxide is not particularly limited, however preferably it is 0.1 to 5 parts by weight and more preferably 0.2 to 2 parts by weight with respect to 100 parts by weight of the synthetic isoprene polymer. If this amount is too little, the tensile strength of the dip molded article may decline in some case; and on the other hand, if it is too much, the stability of the synthetic isoprene polymer particles in the composition for the dip molding declines and the coarse aggregates may be formed in some case.

In the dip molding composition, a disperser; an antioxidant; a reinforcing agent such as carbon black, silica and talc or so; a filler such as calcium carbonate, clay or so; an ultraviolet absorbing agent; a plasticizer or so may be blended as the blending agent depending on the needs.

As the antioxidant, for example, phenol based antioxidant which does not comprise sulfur atoms such as 2,6-di-4-methylphenol, 2,6-di-t-butylphenol, butyl hydroxyanisole, 2,6-di-t-buty1-$\alpha$-dimethylamino-p-cresol, octadecyl-3-(3,5-di-t-butyl-4-hydroxyphenyl) propionate, styrenated phenol, 2,2'-methylene-bis(6-$\alpha$-methyl-benzyl-p-cresol), 4,4'-methylenebis(2,6-di-t-butylphenol), 2,2'-methylene-bis(4-methyl-6-t-butylphenol), alkylated bisphenol, and butylated reaction product between p-cresol and dicyclopentadiene or so; thiobisphenol based antioxidants such as 2,2'-thiobis-(4-methyl-6-t-butylphenol), 4,4'-thiobis-(6-t-butyl-o-cresol), 2,6-di-t-butyl-4-(4,6-bis(octylthio)-1,3,5-triazine-2-ylamino)phenol or so; phosphite ester based antioxidants such as tris(nonylphenyl)phosphite, diphenylisodecylphosphite, tetraphenyldipropyleneglycol-diphosphite or so; sulfur ester based antioxidants such as dilauryl thiodipropionate or so; amine based antioxidants such as phenyl-$\alpha$-naphtylamine, phenyl-$\beta$-naphtylamine, p-(p-toluenesulphonylaminde)-diphenylamine, 4,4'-($\alpha$,$\alpha$-dimethylbenzyl)diphenylamine, N,N-diphenyl-p-phenylenediamine, N-isopropyl-N'-phenyl-p-phenylenediamine, butylaldehyde-aniline condensation product or so; quinolone based antioxidants such as 6-ethoxy-2,2,4-trimethyl-1,2-dihydroquinoline or so; hydroquinone based antioxidants such as 2,5-di-(t-amyl)hydroquinone or so may be mentioned. These antioxidants can be used alone or by combining two or more thereof.

The used amount of the antioxidant is preferably 0.05 to 10 parts by weight, more preferably 0.1 to 5 parts by weight with respect to 100 parts by weight of the synthetic isoprene polymer.

If this amount is too little, the synthetic isoprene polymer may deteriorate. Also, if this amount is too much, the tensile strength of the dip molded article may decline.

The preparation method of the dip molding composition is not particularly limited. As said preparation method, the method of mixing the sulfur based vulcanizing agent, the vulcanization accelerator, zinc oxide and dispersing agent which is added if needed and other blending agent such as antioxidant or so to the synthetic isoprene polymer latex using the disperser such as a ball mill, a kneader, a disperser or so; and the method of first preparing the aqueous dispersion of the desired blending components other than the synthetic isoprene polymer latex in advance using the above mentioned disperser, then mixing said aqueous dispersion with the synthetic isoprene polymer latex or so may be mentioned.

The pH of the composition for the dip molding is preferably 7 or more, and more preferably the pH is 8 to 12. Also, the solid concentration of the dip molding composition is preferably within the range of 15 to 65 wt%.

The dip molding composition is preferably carried out with aging (also called as pre-vulcanization) before the dip molding. The time for pre-vulcanization is not particularly limited, although it depends on the temperature of the pre-vulcanization, and it is preferably 1 to 14 days, and further preferably it is 1 to 7 days. If this time is too short or too long, the tensile strength of the obtained dip molded article may decline in some case. Note that, the temperature of the pre-vulcanization is preferably 20 to 40°C.

Then, after the pre-vulcanization, it is preferably stored at the temperature of 10 to 30°C. If it is kept stored at a high temperature, the tensile strength of the obtained dip molded article may decline in some case.

Dip molded article

The dip molded article described herein is obtained by dip molding the dip molding composition. The dip molding is a method of immersing the mol to the dip molding composition

to deposit said composition to the surface of the mold, then pulling out said composition from the mold, followed by drying said composition deposited on the surface of the mold. Note that, the mold of before the immersion to the composition for the dip molding may be heated in advance. Also, depending on the needs, the solidifier can be used before immersing the mold to the dip molding composition, or after pulling out the mold from the dip molding composition.

As the specific example of the method for using the solidifier, the method of immersing the mold, which is prior to immersing in the dip molding composition, into the solution of solidifier to adhere the solidifier to the mold (an anode coagulation immersion method); the method of immersing the mold which has been deposited with the dip molding composition to the solidifier solution (a Teague coagulation immersion method) or so may be mentioned, however the anode coagulation immersion method is preferable from the point that the dip molded article with little unevenness thickness can be obtained.

As the specific examples of the solidifiers, for example aqueous polyvalent metal salts such as, halogenated metals such as barium chloride, calcium chloride, magnesium chloride, zinc chloride, aluminum chloride or so; nitrates such as barium nitrate, calcium nitrate, zinc nitrate or so; acetates such as barium acetate, calcium acetate, zinc acetate or so; sulfates such as calcium sulfate, magnesium sulfate, aluminum sulfate or so may be mentioned. Among these, calcium salts are preferable, and calcium nitrate is more preferable.

The aqueous polyvalent metal salts may be used alone, or by combining two or more thereof.

The solidifier is preferably used in an aqueous solution state. This aqueous solution may comprise aqueous organic solvent such as methanol, ethanol, isopropanol or so, or nonionic surfactants or so. The concentration of the solidifier may be different depending on the type of the aqueous polyvalent metal salts, however preferably it is 5 to 50 wt%, and more preferably 10 to 30 wt%.

The deposition formed on the mold is usually dried by applying the heat after the mold is pulled out from the dip molding composition. The drying condition may be selected appropriately.

Next, by applying the heat, the deposition formed on the mold is vulcanized.

The heating condition during the vulcanization is not particularly limited, however the heat applying temperature is preferably 60 to 150°C, and more preferably 100 to 130°C; and the heat applying time is 10 to 120 minutes.

The method for applying the heat is not particularly limited; however the method of applying the heat by warm air in the oven, or the method of applying the heat by irradiating the infrared ray may be mentioned.

Also, in order to remove the aqueous impurity (for example, the residues of the surfactant or the solidifiers), the mold is preferably washed by water or warm water, before or after applying the heat to the mold deposited with the dip molding composition. As the warm water used, preferably the temperature is 40 to 80°C, and more preferably 50 to 70°C.

The dip molded article after the vulcanization is released from the mold. As the specific example of the method for releasing, the method of peeling off by hand, or the method of peeling off by water pressure or the compressed air pressure or so may be mentioned. If the dip molded article in the middle of the vulcanization has sufficient strength for releasing, then it may be released in the middle of the vulcanization, and the vulcanization may be continued.

The dip molded article has excellent tensile strength, thus it is preferably used for the groves. In case the dip molded article is the gloves, in order to prevent the dip molded article from adhering against each other at the contact face, and to enhance the smooth attachment and removal, the inorganic fine particles such as talc, calcium carbonate or so, or the organic fine particles such as starch particles or so may be sprayed on the surface of the gloves, or the elastomer layer comprising the fine particles may be formed on the surface of the gloves, or the surface of the glove can be chlorinated.

The dip molded article can be used for medical supplies such as nipples for nursing bottle, dropping pipette, tube, water pillow, balloon sacks, catheter, condoms or so; toys such as balloon, doll, ball or so; industrial supplies such as bags for pressure molding, bags for gas storage or so; finger stalls or so.

EXAMPLES

Hereinafter, the present invention will be described in further detail based on the examples; however the present invention is not to be limited thereto. Note that, hereinafter, "parts" is based on the weight unless mentioned otherwise.

Volume average particle diameter

The volume average particle diameter was determined using the laser diffraction particle size analyzer (the product name "SALD 2200", made by Shimadzu Corporation).

Content of surfactant

0.15 g of the sample was scaled and 2 ml of hyperpure water was added, then by adding the acetonitrile, the solution was set to 10 ml. Next, of the supernatant was filtered by 0.2 $\mu$m disk filter, then it was measured using a reverse-phase high-performance liquid chromatography (HPLC).

Column: the product name "ZORBOX XDB-C18 1.8 $\mu$" (made by Agilent Technologies)
Column temperature: 40°C
Flow speed: 0.75 ml/min
Detector: DAD (diode array detector)
Introduced amount: 2 $\mu$L

Content of the synthetic isoprene polymer

5 g of the sample was scaled, and heated for 2 hours at 105°C, thereby the solid was obtained. Then, from the obtained solid, the content of the surfactant was excluded by calculating; thereby the content of the synthetic isoprene polymer was calculated.

Amount of aggregates (200 mesh filtration)

The sample wherein which the weight (the solid concentration: Y wt%, the weight: Z) was scaled in advance was filtered using a metal net made of 200 mesh stainless (the weight: X). This metal net was dried for 2 hours or more in the drier of 105°C, then the weight of the metal after the drying (the weight: Q) was measured. Next, the amount (wt%) of the aggregates in the sample was obtained from the below equation.

$$\text{The amount of the aggregates} = [(Q - X) / (Y \times Z)] \times 10000 \ (wt\%)$$

Tensile strength, elongation of dip molded article

The tensile strength of the dip molded article was measured based on ASTM D412. The film form dip molded article was punched out using the dumbbell (the product name "Super dumbbell" (Model: SDMK-100C), made by DUMBBELL CO., LTD), thereby the sample for the tensile strength testing was produced. Said sample was pulled using Tensilon universal tester (the product name "RTG-1210", made by ORIENTEC Co.,LTD) at the tensile speed of 500 mm/min, thereby the tensile strength (unit: MPa) right before the rupture and the elongation (unit: %) of right before the rupture were measured.

Production example 1

100 parts of the synthetic isoprene polymer having the weight average molecular weight of 1,300,000 (the product name "NIPOL IR2200L", made by ZEON CORPORATION, homopolymer of isoprene, cis-bonding unit amount 98%) was dissolved in 1150 parts of cyclohexane (made by Wako Pure Chemical Industries Ltd); thereby the cyclohexane solution (b1) of the synthetic isoprene polymer was obtained. Next, 1245 parts of the surfactant aqueous solution (a1) comprising 1 wt% of sodium rosinate (the product name "RONDIS N-18" made by Arakawa Chemical Industries,Ltd) and 0.5 wt% of sodium dodecylbenzene sulfonate (the product name "NEOPLEX G-15" made by Kao Corporation), but not comprising the synthetic isoprene polymer was prepared.

Then, the total amount of the cyclohexane solution (b1) of the above mentioned synthetic isoprene polymer, and the total amount of the above mentioned surfactant aqueous solution (a1) were introduced in the container made of SUS304, then stirred and mixed. Then, the emulsion dispersion treatment was carried out using the homogenizer (the product name "MILDER MDN-303V" made by Pacific Machinery & Engineering Co.,Ltd), thereby the emulsified mixed liquid (c1) was obtained.

Next, using the rotary evaporator (the product name "RE 600", made by YAMATO SIENTIFIC CO.,LTD), the cyclohexane was distilled from the above mentioned emulsified mixed liquid (C1) under the condition of 78°C and -20 kPa (the gauge pressure). Thereby, the synthetic isoprene polymer latex (c1) was obtained.

Then, using metal net made of the 200 mesh stainless, the aggregates in the synthetic isoprene polymer latex (e1) was removed.

Then, to the synthetic isoprene polymer latex (e1) which has been removed with the aggregates, the centrifugation was carried out under the condition of 3000 G, 10 minutes and 20°C using the centrifuge (the product name "H-2000B", made by KOKUSAN Co.,Ltd), thereby the synthetic isoprene polymer latex (d1) having the solid concentration of 55 wt% as the light liquid was obtained, and the waste liquid (f1) comprising 0.5 wt% of the synthetic isoprene polymer and 1.6 wt% of the surfactant was obtained as the heavy liquid.

Example 1

The same procedure as the production example 1 was carried out except for using 1245 parts of the waste liquid (f1) comprising 0.5 wt% of the synthetic isoprene polymer and 1.6 wt% of the surfactant as the aqueous dispersion (a2) instead of 1245 parts of the surfactant aqueous solution (a1) which does not include the synthetic isoprene polymer. Thereby, the synthetic isoprene polymer latex (e2) which is generated by distilling the cyclohexane, the synthetic isoprene polymer latex (d2) having the solid concentration of 55 wt% as the light liquid of after the centrifugation, and the waste liquid (f2) comprising 1.7 wt% of the synthetic isoprene polymer and 1.8 wt% of the surfactant as the heavy liquid were obtained. The amount of the aggregates of the synthetic isoprene polymer latex (e2) was 3.2 wt%.

Next, the waste liquid (f2) was treated using the ultrafiltration device mounted with the filter material made of ceramic (the product name "Rotary fileter-R-FineSSDF-0.5" (made by KOTOBUKI INDUSTRIES CO.,LTD), and ϕ 0.2 μm filter material made of ceramic (made by Novoflow GmbH)), and under the condition of the filter pressure of 180 kPa and the back washing pressure of 160 kPa (5 seconds of backwashing per 2 minutes of filtration); thereby the waste liquid (fs2) after the ultrafiltration was obtained. The waste liquid (fs2) of after the ultrafiltration comprised 0.5 wt% of the synthetic isoprene polymer and 1.7 wt% of the surfactant.

(Dip molding compostion)

First, using sodium hydroxide, the styrene-maleic acid mono-sec-butylester-monomethylester maleate polymer (the product name "Scripset 550" made by Hercules) was 100% neutralized, thereby sodium salt aqueous solution (the concentration of 10 wt%) as the dispersing agent (i) was prepared. Then, this dispersing agent (i) was added to the synthetic isoprene polymer latex (d2) so that it is 0.8 parts in terms of solid portion with respect to 100 parts of above mentioned synthetic isoprene polymer.

Further, while stirring the obtained mixture, the aqueous dispersions of each blending agent was added in terms of the solid portion so to satisfy 1.5 parts of zinc oxide, 1.5 parts of sulfur, 2 parts of antioxidant (the product name "Wingstay L" made by Goodyear Tire and Rubber Company), 0.3 parts of zinc diethylthiocarbamate, 0.5 parts of zinc dibutyldithiocarbamate, 0.7 parts of 2-mercaptobenzothiazol, with respect to 100 parts of synthetic isoprene polymer in the mixture, then potassium hydroxide solution was added; thereby the dip molding composition of which the pH was regulated to 10.5 was obtained. Then, the dip molding composition was aged in the thermostat chamber at 25°C for 48 hours.

(Dip molded article)

The glass mold (the diameter of 5 cm, and the length of ground part of about 15 cm) wherein the surface was ground processed was washed, then it was preheated in the oven of 70°C, then it was immersed in the coagulant aqueous solution comprising calcium nitrate of 18 wt% and polyoxyethylenelaurylether of 0.05 wt% (the product name "EMULGEN 109P" made by KAO CORPORATION) for 5 seconds, then it was taken out.

Next, the glass mold coated with the coagulant was dried in the oven of 70°C. Then, the glass mold coated with the coagulant was taken out from the oven, then it was immersed for 10 seconds at 25°C in the dip molding composition and it was taken out. Then, it was dried for 60 minutes at room temperature and the glass mold coated by a film was obtained. Then, this glass mold coated with the film was immersed in the warm water of 60°C for 2 minutes, and it was dried for 30 minutes by air. Then, this glass mold coated with the film was carried out with the vulcanization for 20 minutes in the oven of 120°C. The glass mold coated with the vulcanized film was cooled to a room temperature, then talc was sprayed and said film was released from the glass mold. The tensile strength and the elongation of the obtained film (the dip molded article) are shown in Table 1.

Example 2

The same procedure as the example 1 was carried out except that 1245 parts of the waste liquid (fs2) comprising 0.5 wt% of the synthetic isoprene polymer and 1.7 wt% of the surfactant was used instead of the aqueous dispersion (a2); thereby the synthetic isoprene polymer latex (e3) which is generated by distilling the cyclohexane, the synthetic isoprene polymer latex (d3) having the solid concentration of 55 wt% as the light liquid, and the waste liquid (f3) comprising 1.6 wt% of synthetic isoprene polymer and 1.8 wt% of the surfactant were obtained. The amount of the aggregates of the synthetic isoprene polymer latex (e3) was 3.3 wt%.

Next, the waste liquid (f3) was treated with the ultrafiltration device mounted with the filter material made of the ceramic as same as the example 1, thereby the waste liquid (fs3) of after the ultrafiltration was obtained. The waste liquid (fs3) of after the ultrafiltration comprised 0.5 wt% of the synthetic isoprene polymer and 1.6 wt% of the surfactant.

Also, the dip molding composition was prepared as same as the example 1 except for using the synthetic isoprene polymer latex (d3) instead of the synthetic isoprene polymer latex (d2); thereby the film (the dip molded article) was obtained. The tensile strength and the elongation of the obtained film (the dip molded article) are shown in Table 1.

Example 3

The same procedure as the example 1 was carried out except that 1245 parts of the waste liquid (fs3) comprising 0.5 wt% of the synthetic isoprene polymer and 1.6 wt% of the surfactant was used instead of the aqueous dispersion (a2); thereby the synthetic isoprene polymer latex (e4) which is generated by distilling the cyclohexane, the synthetic isoprene polymer latex (d4) having the solid concentration of 55 wt% as the light liquid, and the waste liquid (f4) comprising 1.7 wt% of the synthetic isoprene polymer and 1.7 wt% of the surfactant were obtained. The amount of the aggregates of the synthetic isoprene polymer latex (e3) was 4.2 wt%.

Next, the waste liquid (f4) was treated with the ultrafiltration device mounted with the filter material made of the ceramic as same as the example 1, thereby the waste liquid (fs4) after the ultrafiltration was obtained. The waste liquid (fs4) of after the ultrafiltration comprised 0.6 wt% of the synthetic isoprene polymer and 1.7 wt% of the surfactant.

Also, the dip molding composition was prepared as same as the example 1 except for using the synthetic isoprene polymer latex (d4) instead of the synthetic isoprene polymer latex (d2); thereby the film (the dip molded article) was obtained. The tensile strength and the elongation of the obtained film (the dip molded article) are shown in Table 1.

Example 4

As similar to the example 1, the waste liquid (fs2) of after the ultrafiltration comprising 0.5 wt% of the synthetic isoprene polymer and 1.7 wt% of the surfactant was obtained. To this waste liquid (fs2) of after the ultrafiltration, a part of the synthetic isoprene polymer latex (d2) having the solid concentration of 55 wt% was added; thereby the aqueous dispersion (a3) comprising 2.7 wt% of the synthetic isoprene polymer and 1.6 wt% of the surfactant was obtained.

The same procedure was carried out as the example 1, except for using 1245 parts of the aqueous dispersion (a3) instead of 1245 parts of the aqueous dispersion (a2); thereby the synthetic isoprene polymer latex (e5) which is generated by distilling the cyclohexane, the synthetic isoprene polymer latex (d5) having the solid concentration of 55 wt% as the light liquid was obtained, and the waste liquid (f5) comprising 4.3 wt% of the synthetic isoprene polymer and 2.0 wt% of the surfactant was obtained. The amount of the aggregates of the synthetic isoprene polymer latex (e3) was 8.4 wt%.

Also, the dip molding composition was prepared as same as the example 1 except for using the synthetic isoprene polymer latex (d5) instead of the synthetic isoprene polymer latex (d2); thereby the film (the dip molded article) was obtained. The tensile strength and the elongation of the obtained film (the dip molded article) are shown in Table 1.

<u>Comparative example 1</u>

Using sodium rosinate (the product name "RONDIS N-18" made by Arakawa Chemical Industries,Ltd), sodium dodecylbenzene sulfonate (the product name "NEOPLEX G-15" made by Kao Corporation) and a part of the synthetic isoprene polymer latex (d2) obtained in the example 1, the aqueous dispersion (ac1) comprising 10 wt% of the synthetic isoprene polymer and 1.9 wt% of the surfactant (two times of weight of sodium rosinate is present with respect to the weight of sodium dodecyl benzene sulfonate) was obtained.

The same procedure as the example 1 was carried out, except for using 1245 parts of the aqueous dispersion (ac1) instead of 1245 parts of the aqueous dispersion (a2); thereby the synthetic isoprene polymer latex (ec1) generated by distilling the cyclohexane, the synthetic isoprene polymer latex (dc1) having the solid concentration of 55 wt% as the light liquid, and the waste liquid (fc1) comprising 11.5 wt% of the synthetic isoprene polymer and 2.1 wt% of the surfactant were obtained. The amount of the aggregates of the synthetic isoprene polymer latex (ec1) was 17.4 wt%.

Also, the dip molding composition was prepared as same as the example 1 except for using the synthetic isoprene polymer latex (de1) instead of the synthetic isoprene polymer latex (d2); thereby the film (the dip molded article) was obtained. The tensile strength and the elongation of the obtained film (the dip molded article) are shown in Table 1.

Table 1

| | | | Example 1 | Example 2 | Example 3 | Example 4 | Comparative example 1 |
|---|---|---|---|---|---|---|---|
| Aqueous dispersion (A) | Synthetic isoprene polymer | (wt%) | 0.5 | 0.5 | 0.5 | 2.7 | 10 |
| | Surfactant | (wt%) | 1.6 | 1.7 | 1.6 | 1.6 | 1.9 |
| Organic solvent solution (B) of synthetic isoprene polymer | Synthetic isoprene polymer ("IR2200L") | (parts) | 100 | 100 | 100 | 100 | 100 |
| | Cyclohexane | (parts) | 1150 | 1150 | 1150 | 1150 | 1150 |
| step of distilling cyclohexane | Aggregates in latex | (wt%) | 3.2 | 3.3 | 4.2 | 8.4 | 17.4 |
| Heavy liquid (waste liquid (F)) of after centrifugation | Synthetic isoprene polymer | (wt%) | 1.7 | 1.6 | 1.7 | 4.3 | 11.5 |
| | Surfactant | (wt%) | 1.8 | 1.8 | 1.7 | 2.0 | 2.1 |
| Ultrafiltrated heavy liquid (waste liquid (F)) | Synthetic isoprene polymer | (wt%) | 0.5 | 0.5 | 0.6 | No ultrafiltration | No ultrafiltration |
| | Surfactant | (wt%) | 1.7 | 1.6 | 1.7 | | |
| Synthetic isoprene polymer latex (D) (light liquid after centrifugation) | Volume average particle diameter | ($\mu$m) | 1.12 | 1.18 | 1.15 | 1.35 | 0.90 |
| | Viscosity (B type viscometer) | (mPa·s) | 90 | 70 | 70 | 65 | 120 |
| | Solid concentration | (wt%) | 55 | 55 | 55 | 55 | 55 |
| Dip molding composition | Synthetic isoprene polymer | (parts) | 100 | 100 | 100 | 100 | 100 |
| | Disperser ("Scripset550" Na salt) | (parts) | 0.8 | 0.8 | 0.8 | 0.8 | 0.8 |
| | Zinc oxide | (parts) | 1.5 | 1.5 | 1.5 | 1.5 | 1.5 |
| | Sulfur | (parts) | 1.5 | 1.5 | 1.5 | 1.5 | 1.5 |
| | Antioxidant agent ("Wingstay L") | (parts) | 2 | 2 | 2 | 2 | 2 |
| | Zinc diethyldithiocarbamate | (parts) | 0.3 | 0.3 | 0.3 | 0.3 | 0.3 |
| | Zinc dibutyldithiocarbamate | (parts) | 0.5 | 0.5 | 0.5 | 0.5 | 0.5 |
| | Zinc mercaptobenzothiazole salt | (parts) | 0.7 | 0.7 | 0.7 | 0.7 | 0.7 |
| | pH of dip molding composition | (parts) | 10. 5 | 10.5 | 10.5 | 10.5 | 10.5 |
| Dip molded article | Tensile strength (MPa) | | 24 | 25 | 26 | 24 | 16 |
| | Elongation (%) | | 950 | 950 | 950 | 950 | 900 |

EP 2 980 127 B1

14

According to Table 1, when those having the amount of the synthetic isoprene polymer and the amount of the surfactant is within the range defined in the present invention is used as the aqueous dispersion (A), the amount of the aggregates in the synthetic isoprene polymer latex which is generated by removing the cyclohexane is small, and the tensile strength of the obtained dip molded article was good (the examples 1 to 4).

Also, in the examples 1 to 3, the heavy liquid (the waste liquid) of after the centrifugation is collected and recycled as the aqueous dispersion (A), thus the discarded amount of the surfactant and the synthetic isoprene polymer during the production step of the synthetic isoprene polymer latex is reduced.

On the contrary to this, when those having the amount of the synthetic isoprene polymer which exceeds the range defined in the present invention is used as the aqueous dispersion (A), the amount of the aggregates in the synthetic isoprene polymer latex which is obtained was large, and the tensile strength of the obtained dip molded article was poor (the comparative example 1).

NUMERICAL REFERENCES

SF1    Shaft having hollow structure
DS1    Filter material made of ceramic
FE1    Heavy liquid (waste liquid (F))
FE2    Filtrate of after ultrafiltration
P      Pump
AR1    Air removing line

**Claims**

1. A method for producing a synthetic isoprene polymer latex (D) comprising a step of mixing an aqueous dispersion (A) comprising 0.1 to 5 wt% of a synthetic isoprene polymer and 0.1 to 20 wt% of a surfactant, and an organic solvent solution (B) of a synthetic isoprene polymer and emulsifying the mixture to obtain a emulsified mixed liquid (C), then removing the organic solvent from the emulsified mixed liquid (C).

2. The method for producing the synthetic isoprene polymer latex (D) as set forth in claim 1, further comprising a step of centrifuging a synthetic isoprene polymer latex (E) obtained by removing the organic solvent solution from said emulsified mixed liquid (C), to obtain the synthetic isoprene polymer latex (D) as a light liquid and a waste liquid (F) comprising the synthetic isoprene polymer and a surfactant as a heavy liquid.

3. The method for producing the synthetic isoprene polymer latex (D) as set forth in claim 2, wherein said aqueous dispersion (A) is obtained by ultrafiltration of said waste liquid (F).

**Patentansprüche**

1. Verfahren zur Herstellung eines synthetischen Isopren-Polymerlatex (D), umfassend einen Schritt des Mischens einer wässrigen Dispersion (A), die 0,1 bis 5 Gew.-% eines synthetischen Isoprenpolymers und 0,1 bis 20 Gew.-% eines oberflächenaktiven Mittels umfasst, und einer organischen Lösungsmittellösung (B) eines synthetischen Isoprenpolymers und Emulgieren des Gemisches unter Erhalt einer emulgierten gemischten Flüssigkeit (C), danach Entfernen des organischen Lösungsmittels aus der emulgierten gemischten Flüssigkeit (C).

2. Verfahren zur Herstellung des synthetischen Isopren-Polymerlatex (D), wie in Anspruch 1 angegeben, das außerdem einen Schritt des Zentrifugierens eines synthetischen Isopren-Polymerlatex (E), der durch Entfernen der organischen Lösungsmittellösung aus der emulgierten gemischten Flüssigkeit (C) erhalten worden war, umfasst, um den synthetischen Isopren-Polymerlatex (D) als leichte Flüssigkeit und eine Abfallflüssigkeit (F), die das synthetische Isoprenpolymer und ein oberflächenaktives Mittel umfasst, als schwere Flüssigkeit zu erhalten.

3. Verfahren zur Herstellung des synthetischen Isopren-Polymerlatex (D), wie in Anspruch 2 angegeben, wobei die wässrige Dispersion (A) durch Ultrafiltration der Abfallflüssigkeit (F) erhalten wird.

**Revendications**

1. Procédé de production d'un latex de polymère d'isoprène de synthèse (D) comprenant une étape de mélange d'une dispersion aqueuse (A) comprenant 0,1 à 5 % en poids d'un polymère d'isoprène de synthèse et 0,1 à 20 % en poids d'un tensioactif, et d'une solution de solvant organique (B) d'un polymère d'isoprène de synthèse et d'émulsification du mélange pour obtenir un liquide mélangé émulsifié (C), puis d'élimination du solvant organique du liquide mélangé émulsifié (C).

2. Procédé de production du latex de polymère d'isoprène de synthèse (D) selon la revendication 1, comprenant en outre une étape de centrifugation d'un latex de polymère d'isoprène de synthèse (E) obtenu en éliminant la solution de solvant organique dudit liquide mélangé émulsifié (C), pour obtenir le latex de polymère d'isoprène de synthèse (D) sous la forme d'un liquide léger et un liquide résiduaire (F) comprenant le polymère d'isoprène de synthèse et un tensioactif sous la forme d'un liquide lourd.

3. Procédé de production du latex de polymère d'isoprène de synthèse (D) selon la revendication 2, dans lequel ladite dispersion aqueuse (A) est obtenue par ultrafiltration dudit liquide résiduaire (F).

Fig.1

**EP 2 980 127 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009179680 A